# EUROPEAN PATENT SPECIFICATION

(11) **EP 1 826 948 B1**
(45) Date of publication and mention of the grant of the patent: **27.08.2008**
(21) Application number: 06110357.8
(22) Date of filing: 23.02.2006
(51) Int. Cl.: H04L 12/28

(54) **Combination Modes For Network Connection Management**
Kombinierte Modi für das Netzwerk-Verbindungsmanagement
Modes combinés pour la gestion de la connexion du réseau

(43) Date of publication of application: 29.08.2007
(73) Proprietor: Research In Motion Limited, Waterloo, Ontario N2L 3W8 (CA)
(72) Inventor: Robertson, Ian, Waterloo, OntarioN2J 1H4 (CA)
(74) Representative: Rickard, David John

(56) References cited:
- EP-A- 1 395 002
- WO-A-01/74011
- "Bluetooth Gefährdungen und Sicherheitsmassnahmen"[Online] 2003, - 2003 pages 1-14, XP002389085 Bonn Retrieved from the Internet: URL:http://www.bsi.de/literat/doc/bluetoot h/bluetooth.pdf> [retrieved on 2006-07-06]

## Description

The present invention relates to communication in small-scale networks and, more particularly, to combining modes of a communication device, which modes determine availability of the device to form a network connection to another device.

As small electronic devices, such as portable music players, cellular telephones, digital cameras, personal digital assistants (PDAs), etc., proliferate and receive increasing amounts of memory and computing power, the need for the devices to occasionally be connected to a personal computer, e.g., to exchange data, increases correspondingly. Unfortunately, up until recently, this proliferation led to an unruly number of connection cables being required, often a specific connection cable for each device, and a requirement that the personal computer have increasing numbers of available ports. To relieve the requirement for vast quantities of connection cables and ports, wireless personal area networks (PAN) have been developed. One standard for such a wireless PAN is called Bluetooth™ and operates to allow the formation of small-scale wireless networks over low-cost, globally available short-range radio frequencies. For published Bluetooth standards and other related information, see www.bluetooth.org.

The first step in the creation of a small scale wireless network, and often the only step, is the establishment of a network connection between two devices. A first device may establish a trusted relationship with a second device by learning (by user input) a secret, known as a "passkey", specific to the second device. Through a "pairing" procedure, the first device learns a Bluetooth address of the second device. The Bluetooth address is a 48-bit device identifier. However, before the pairing procedure can be initiated by the first device, the first device "discovers" the second device. The first device may, to this end, scan the frequencies used by Bluetooth devices to determine whether any such devices are in range. Where the second device is in range and is in a "discoverable" mode (visible to other Bluetooth devices), the second device responds to the scan with, among other data, an indication of the Bluetooth address of the second device. The first device may then use the indicated Bluetooth address in the pairing procedure.

Accordingly, one of the most well-known and basic Bluetooth security mechanisms is the ability of a user to select whether a device is to be in the discoverable mode or in a "non-discoverable" mode. That is, users place their device in non-discoverable mode so that the Bluetooth address of their device may not be provided to other, non-trusted devices.

Problematically, since the Bluetooth address of the second device is permanent, at a later time, even after the second device has been placed in non-discoverable mode, the first device may still initiate the pairing procedure and thereby form a connection with the second device. This type of attack is known as "BlueSnarfing" and can range from annoyance (the user of the first device sends a rude message in the pairing request to the second device) to privilege escalation (the user of the first device tricks the user of the second device into allowing the connection). Privilege escalation opens the door to secondary attacks, such as the first device requesting and receiving Short Messaging Service and Address book information from the second device or changing call forwarding rules on the second device.

Maintaining a device in non-discoverable mode has security benefits, but has the potential to make pairing cumbersome when the user wants to make a legitimate connection. It may be considered inconvenient to the user to have to change to discoverable mode when the user wants to pair with another device and then change back afterwards. Furthermore, such a strategy does not eliminate the vulnerability of the device to BlueSnarfing attacks.

In EP 1 395 002, a user may select one of an "office", "mobile", "home" and "other" mode for a laptop, each with default values for discoverability and pairability. Via a mode property sheet, a user may change the default settings.

A network connection establishment protocol is made more secure by directly associating a mode in which a device does not actively scan for inquiry messages from nearby devices (non-discoverable mode) with a mode in which messages intended to initiate the establishment of a wireless network connection are rejected (non-pairable mode) in a combined closed (non-discoverable/non-pairable) mode. Advantageously, rather than allowing incoming pairing requests even when a device is non-discoverable, the device in the closed mode rejects all pairing requests. Responsive to specific initiation, the device may enter an "open" (combined discoverable/pairable) mode, in which the device does actively scans for, and responds to, inquiry messages from nearby devices (discoverable mode) and a mode in which messages intended to initiate the establishment of a wireless network connection are accepted (pairable mode). The device may be preconfigured to revert from the open mode to the closed mode after a given duration of time or after a given number of pairings have been completed. GENERAL

In accordance with an aspect of the present invention there is preferably provided a method of enhancing security of wireless communications at a device. The method includes providing an open mode, in which frequencies are scanned for incoming address inquiries and pairing of the device with a requesting device may be initiated whenever a request is received to establish wireless communications, and providing a closed mode, in which frequencies are not scanned for incoming address inquiries and pairing is not initiated when a request is received to establish wireless communications and, after switching from said closed mode to said open mode, reverting to said closed mode after one of (i) a pre-determined duration and (ii) completing a pre-determined number of pairings. In other aspects of the invention, there is provided a computer readable medium for adapting a processor to carry out this method.

In accordance with another aspect of the present invention there is preferably provided a mobile communication device. The mobile device includes an antenna, a receiver and a controller. The controller is adapted to, in an open mode, instruct the receiver to use the antenna to scan for incoming address inquiries and initiate pairing of the device with a requesting device responsive to receiving a request to establish wireless communications and, in a closed mode instruct the receiver not to scan for incoming address inquiries and transmit a refusal message to a requesting device responsive to receiving a request to establish wireless communications, wherein said controller, after switching from said closed mode to said open mode, reverts to said closed mode after one of (i) a pre-determined duration and (ii) completing a predetermined number of pairings.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures which illustrate example embodiments of this invention:

FIG. 1 illustrates an exemplary personal area network;

FIG. 2A illustrates modes of operation related to the activation of a networking protocol;

FIG. 2B illustrates modes of operation related to the availability of a device to be discovered by another device;

FIG. 2C illustrates modes of operation related to the availability of a device to form a network connection with another device;

FIG. 3 illustrates states of operation, in one of the modes of FIG. 2B, related to the activities of a device being discovered by another device;

FIG. 4 illustrates modes of operation related to a combination of the availability of a device to be discovered by another device and the availability of a device to form a network connection with another device;

FIG. 5 illustrates steps in a first exemplary method of switching between the modes of FIG. 4 according to an embodiment of the present invention;

FIG. 6 illustrates steps in a second exemplary method of switching between the modes of FIG. 4 according to an embodiment of the present invention; and

FIG. 7 illustrates a wireless mobile communication device from the exemplary personal area network of FIG. 1, according to an embodiment of the present invention.

### DESCRIPTION OF PREFERRED EMBODIMENTS

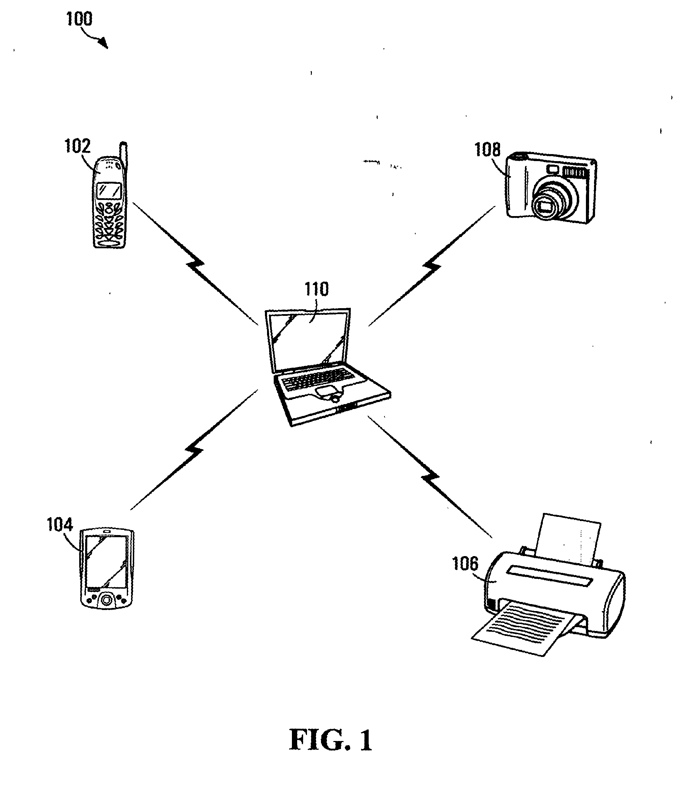

FIG. 1 illustrates an exemplary small-scale wireless network 100 including five elements, where each of the elements has been adapted to use a network connection establishment protocol, e.g., Bluetooth. The elements include a mobile communication device 102, a PDA 104, a printer 106, a digital camera 108 and a personal computer 110. As illustrated in FIG. 1, the mobile communication device 102, the PDA 104, the printer 106 and the digital camera 108 communicate with the personal computer 110 using Bluetooth. Additionally or alternatively, the mobile communication device 102 may have a separate Bluetooth connection with the PDA 104.

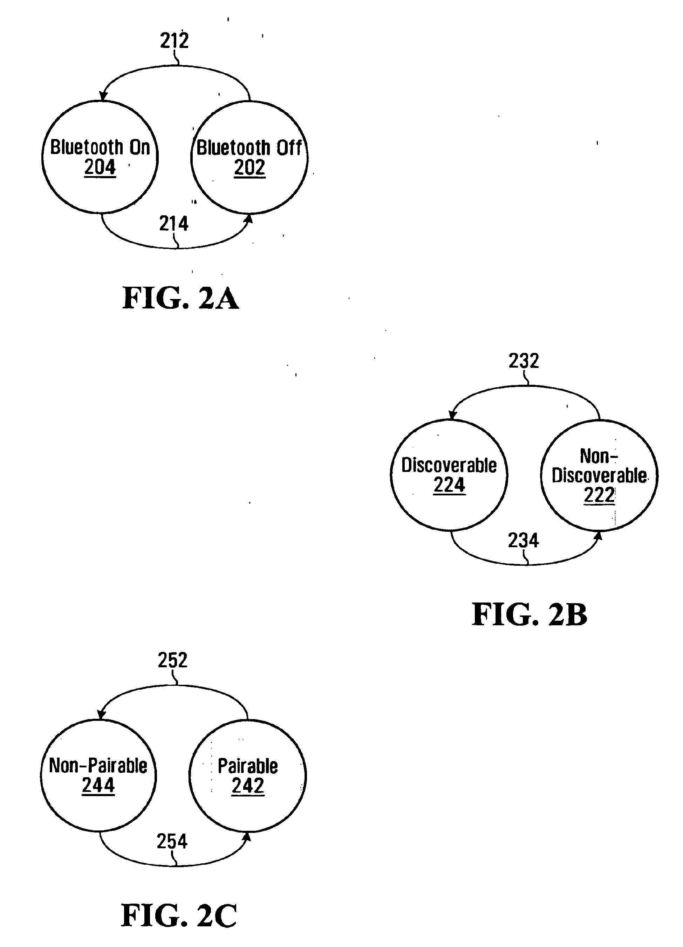

Modes of operation for an exemplary known Bluetooth device are illustrated in FIGS. 2A, 2B and 2C.

As illustrated in FIG. 2A, when the Bluetooth function is available on a device, the device may be in one of two states with respect to the function. By default, the Bluetooth function may be disabled (Bluetooth off state 202 in FIG. 2A). A user may employ a user interface, including a user input device, on the device to actively toggle 212 the device from the Bluetooth off state 202 to a Bluetooth on state 204. Equally, when the device is in the Bluetooth on state 204, the user may toggle 214 the device to the Bluetooth off state 202.

When a first device is first placed into the Bluetooth on state 204, the first device may be in a non-discoverable mode 222 (FIG. 2B) by default. A user intent on forming a connection between the first device and another device may then toggle 232 the first device from the non-discoverable mode 222 to a discoverable mode 224. In the discoverable mode 224, as will be expanded on hereinafter, the first device scans predetermined radio frequencies to receive messages from other devices attempting to discover nearby devices that are both in the Bluetooth on state 204 and in the discoverable mode 224. Upon receiving such a message from another device, the first device may send a response that includes the Bluetooth address of the first device.

After being placed into the discoverable mode 224, the device may stay in the discoverable mode 224 for at least a predetermined duration. At a later time, perhaps once the device has been discovered, the user may opt, say, for security reasons, to toggle 234 the device back to the non-discoverable mode 222. In the non-discoverable mode 222, since the device does not scan for messages from nearby devices, the device does not respond to such messages and the nearby devices cannot learn the Bluetooth address of the device.

Additionally, when the first device is placed into the Bluetooth on state 204, the device may be in a "pairable" mode 242 (FIG. 2C) by default. In the pairable mode 242, the first device accepts pairing initiated by a remote device. That is, the first device negotiates the creation of a bond or connection between the first device and the remote device. Once the first device has been paired with the other device, the user may opt, perhaps for security reasons, to toggle 254 the first device back to the non-pairable mode 242. While in the non-pairable mode 242, the first device maintains the connection with the remote device, as well as any previously established pairings.

Most modern Bluetooth devices are the pairable mode 242 by default whenever the device is in the Bluetooth on state 204 and do not provide an interface to toggle to the non-pairable mode 242. However, a "non-pairable" mode 244 is defined in the Bluetooth standard, so it is possible that a device may include a user interface to allow a user to toggle 252 the device into the non-pairable mode 244. In the non-pairable mode 244, the first device does not accept pairing initiated by the remote device. In particular, the first device will respond to a pairing request with a refusal message indicating that the first device has not accepted the pairing request.

Communication using Bluetooth involves frequency-hopping spread spectrum (FHSS) transmission. In FHSS transmission, the carrier signal that carries the information signal is rapidly switched among many frequency channels using a pseudorandom sequence known to both the transmitter and the receiver. Advantages of spread spectrum transmission over a fixed-frequency transmission include: resistance to noise and interference; interception difficulty; and ability to share a frequency band with many types of conventional transmissions with minimal interference.

In typical operation, a first Bluetooth device that is to discover other Bluetooth devices enters an inquiry sub-state. In the inquiry sub-state, the first Bluetooth device continuously transmits an inquiry message on different frequency channels.

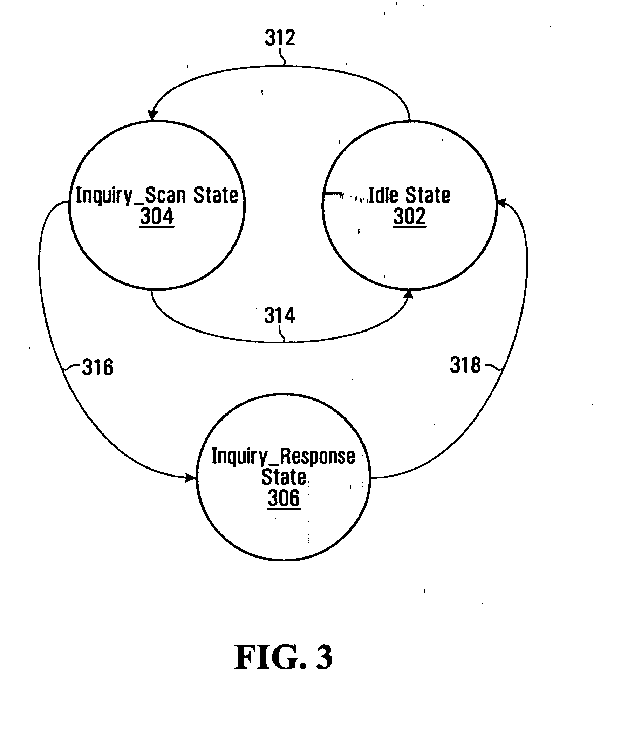

FIG. 3 illustrates states of a Bluetooth device in the discoverable mode 224. The states include an IDLE state 302, an INQUIRY_SCAN state 304 and an INQUIRY_RESPONSE state 306.

When a device is in the IDLE state 302 of discoverable mode 224, the device enters 312 the INQUIRY_SCAN state 304 periodically to scan for an inquiry message, e.g., a General Inquiry Access Code (GIAC). If an inquiry message is not received, the device returns 314 to IDLE state 302. If an inquiry message is received, the device enters 316 the INQUIRY_RESPONSE state 306. In the INQUIRY_RESPONSE state 306, the device transmits a response message to the origin of the inquiry message. The response message includes, in part, an indication of the Bluetooth address of the device so that, at a later time, the origin of the inquiry message may take further steps to negotiate a connection with the device. Once the device has transmitted the response message to the origin of the inquiry message, the device returns 318 to IDLE state 302.

When in the non-discoverable mode 222, the device does not scan for inquiry messages and, since no inquiry messages are received, no response messages are sent. That is, the device does not respond to signals received from another device that is scanning for discoverable Bluetooth devices.

It is notable that, when a remote device has discovered the device, the remote device stores the Bluetooth network address of the discovered device for future reference. The remote device may, at any time subsequent to discovering the device, attempt pairing with the discovered device. Such an attempt may be made using a Bluetooth Link Manager Protocol (LMP), by transmitting a protocol data unit (PDU) intended to initiate pairing. As the PDU includes a random number, the PDU is called an LMP_in_rand.

It is typical that the device be in the pairable mode 242, in which case the discovered device may respond to the received LMP_in_rand PDU with a PDU that allows the pairing process to progress.

If the discovered device is in the non-pairable mode 244, the discovered device responds to a received LMP_in_rand PDU with an LMP_not_accepted PDU. The LMP_not_accepted PDU is defined to include a field wherein a reason for not allowing the pairing may be specified. In this case, the discovered device may indicate the reason as "pairing not allowed".

In review, when a first device is discoverable, the first device will react to receiving an inquiry message from a second device by transmitting a response message to the second device that includes the Bluetooth address of the first device. Once the second device has recorded the Bluetooth address for the first device, the second device can send the first device a pairing request (a LMP_in_rand PDU) without regard for whether the first device is in the discoverable mode 224. It is highly likely that the first device is in the pairable mode 242, in which case the first device will respond to the pairing request and allow the pairing to take place. As such, the practice of toggling a device to the non-discoverable mode 222 for security reasons may not be truly secure.

Clearly, while a device is in the Bluetooth on state 204, the device is most secure while in both the non-discoverable mode 222 and the non-pairable mode 244.

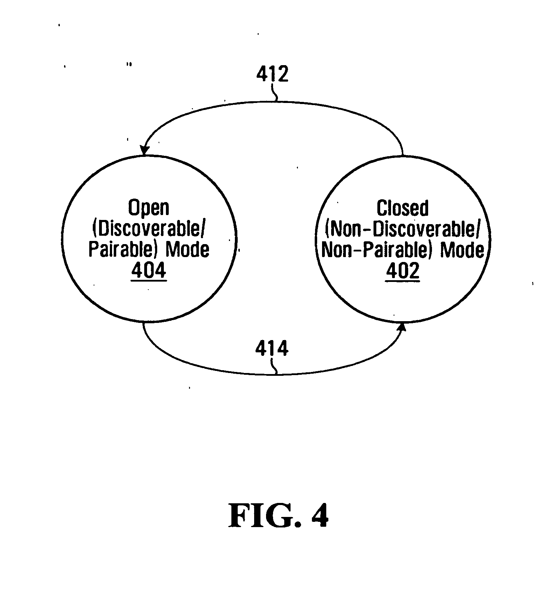

In overview, a closed mode 402 (see FIG. 4) is proposed herein that is a combination of the non-discoverable mode 222 and the non-pairable mode 244. When a device is in the closed mode 402, the device does not accept any pairing request PDUs. That is, the device responds to a received LMP_in_rand PDU with an LMP_not_accepted PDU.

When the first device is placed into the Bluetooth on state 204, the device may be in the closed mode 402 by default. When a user of a first device wants to establish a pairing between the first device and a second device, the user may toggle 412 the first device into an open mode 404 that is a combination of the discoverable mode 224 and the pairable mode 242.

The first device may be arranged to remain in the open mode 404 only for a predetermined duration. At the end of the duration, the first device may be arranged to automatically return 414 to the closed mode 402. Alternatively, the first device may be arranged to remain in the open mode 404 only for a predetermined number of pairings. Once the device has completed the predetermined number of pairings, the first device may be arranged to automatically return 414 to the closed mode 402. Notably, even if a nefarious device is able to determine the Bluetooth address of the first device while the first device is in the open mode 404, the first device will respond to any pairing request PDUs received after automatically returning to the closed mode 402 with an LMP_not_accepted PDU.

As discussed hereinbefore, it is typical for a Bluetooth device to include a user interface allowing a selection between the discoverable mode 224 and the non-discoverable mode 222. However, it is not typical for a Bluetooth device to include a user interface allowing a selection between the pairable mode 242 and the non-pairable mode 244. In implementing aspects of the present invention, the user interface may need no changes. Instead, a Bluetooth device may simply be in the closed mode 402 by default and respond to a user selection, through use of the user interface, of the discoverable mode 224 by entering 412 the open mode 404. The Bluetooth device may subsequently respond to the selection of the non-discoverable mode 222 by entering 414 the closed mode 402. However, as discussed hereinbefore, it is preferred that the Bluetooth device revert to the closed mode 402 after a predetermined duration.

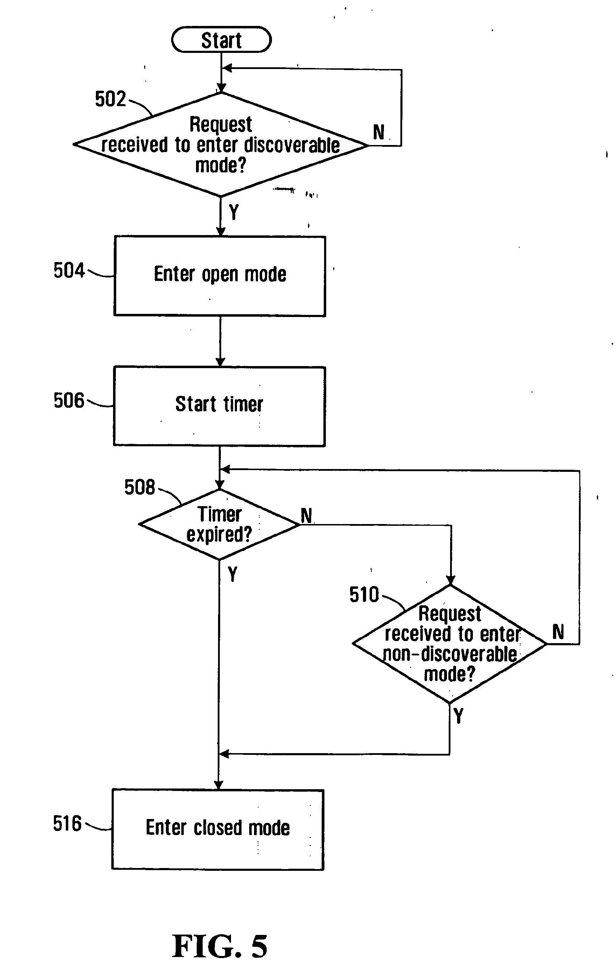

A first exemplary method of operation is illustrated in FIG. 5. Assuming that the device is in the closed mode 402 by default, the device may determine (step 502) whether a request to enter the discoverable mode 224 has been received. In the event that such a request is determined not to have been received, the device may stay in the closed mode 402 and wait for a later request. If the device determines that a request to enter the discoverable mode 224 has been received, the device enters open mode 404 (step 504). That is, the device takes the necessary steps to enter the discoverable mode 224 and the pairable mode 242.

The device may then start a timer (step 506). The timer may be, for example, a count-down timer that has a predetermined initial value and counts down to zero. Alternatively, the timer may be a count-up timer and may count from zero up to a predetermined final value.

The device may then determine (step 508) whether the timer has expired. Expiry of the count-down timer may mean reaching zero, while expiry of the count-up timer may mean reaching the predetermined final value. If the device determines that the timer has not expired, the device may then determine (step 510) whether a request to enter the non-discoverable mode 222 has been received. In the event that such a request is determined not to have been received, the device may return to determining (step 508) whether the timer has expired. If the device determines (step 510) that a request to enter the non-discoverable mode 222 has been received, the device enters closed mode 402 (step 516). That is, the device takes the necessary steps to enter the non-discoverable mode 222 and the non-pairable mode 244. If the device determines (step 508) that the timer has expired, the device enters closed mode 402 (step 516).

In the closed mode 402, that is, the combination of the non-discoverable mode 222 and the non-pairable mode 244, the device maintains existing pairings but rejects new attempts to initiate pairing. Optionally, for instance, for security audit purposes, the device may record, say, in a log, each rejected attempt to initiate pairing.

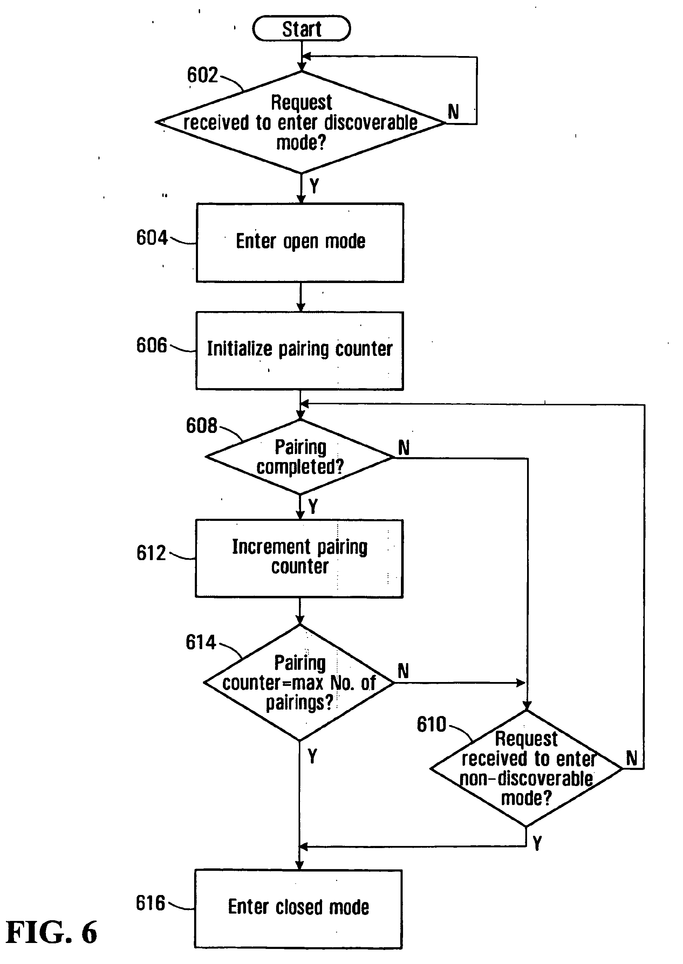

A second exemplary method of operation is illustrated in FIG. 6. Assuming that the device is in the closed mode 402 by default, the device may determine (step 602) whether a request to enter the discoverable mode 224 has been received. In the event that such a request is determined not to have been received, the device may stay in the closed mode 402 and wait for a later request. If the device determines that a request to enter the discoverable mode 224 has been received, the device enters open mode 404 (step 604). That is, the device takes the necessary steps to enter the discoverable mode 224 and the pairable mode 242.

The device may then initialize a pairing counter (step 606). The pairing counter may be, for example, arranged to count up, in which case the pairing counter is initialized to zero. Alternatively, the pairing counter may be arranged to count-down, in which case the pairing counter is initialized to a predetermined maximum number of allowed pairings per entry into the open mode 404.

The device may then determine (step 608) whether a pairing has been completed. If the device determines that a pairing has not been completed, the device may then determine (step 610) whether a request to enter the non-discoverable mode 222 has been received. In the event that such a request is determined not to have been received, the device may return to determining (step 608) whether a pairing has been completed. If the device determines (step 610) that a request to enter the non-discoverable mode 222 has been received, the device enters closed mode 402 (step 616). That is, the device takes the necessary steps to enter the non-discoverable mode 222 and the non-pairable mode 244.

If the device determines (step 608) that a pairing has been completed, the pairing counter is incremented (step 612). Such incrementing assumes that the pairing counter is arranged to count up. If the pairing counter is arranged, as mentioned above, to count down, step 612 involves reducing the value stored in the pairing counter by one.

The device may then determine (step 614) whether the pairing counter has reached a value equivalent to a predetermined value representative of a maximum number of allowed pairings per entry into the open mode 404. In the alternative, wherein the pairing counter counts down from being initialized to a predetermined maximum number of allowed pairings per entry into the open mode 404, the determining of step 614 may involve determining whether the pairing counter has reached zero.

If the device determines (step 614) that the predetermined maximum number of allowed pairings per entry into the open mode 404 have not yet occurred, the device may then determine (step 610) whether a request to enter the non-discoverable mode 222 has been received. In the event that such a request is determined not to have been received, the device may return to determining (step 608) whether a pairing has been completed. If the device determines (step 610) that a request to enter the non-discoverable mode 222 has been received, the device enters closed mode 402 (step 616). That is, the device takes the necessary steps to enter the non-discoverable mode 222 and the non-pairable mode 244.

In the closed mode 402, that is, the combination of the non-discoverable mode 222 and the non-pairable mode 244, the device maintains existing pairings but rejects new attempts to initiate pairing.

The predetermined maximum number of allowed pairings per entry into the open mode 404 may be user configurable and may, for instance, have a default value of one.

The first exemplary method (FIG. 5), wherein the device uses a timer expiry as the criteria for switching from the open mode 404 to the closed mode 402, may not be as preferable as the second exemplary method (FIG. 6), wherein the device uses the maximum number of pairings as the criteria for switching from the open mode 404 to the closed mode 402. In particular, in the second exemplary method (FIG. 6), if the maximum number of pairings is set to one, the user may request a switch from the closed mode 402 to the open mode 404 to pair with a desired device, accomplish the pairing in a short amount of time and automatically revert to the closed mode 402.

In contrast, in the first exemplary method (FIG. 5) the user may request a switch from the closed mode 402 to the open mode 404 to pair with a desired device and accomplish the pairing in a short amount of time. The device then remains in the open mode 402 until the time expires, at which point the device automatically reverts to the closed mode 402. It may be considered that, during the time between the completion of the pairing and the expiry of the timer, the device is unnecessarily vulnerable to being discovered.

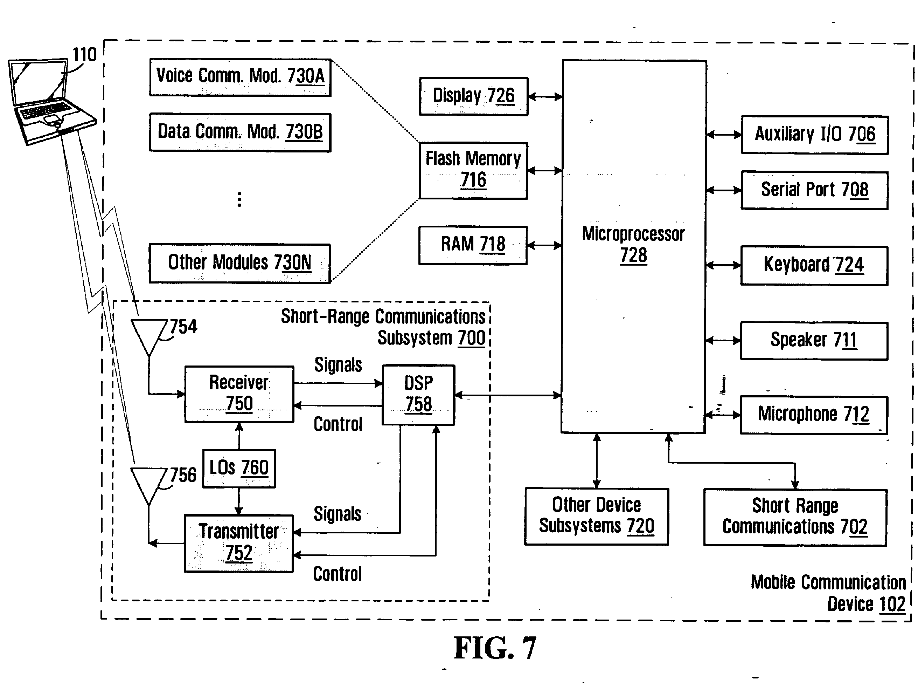

FIG. 7 illustrates, in greater detail, the wireless mobile device 102 familiar from FIG. 1. Aspects of the present invention may be implemented in the wireless mobile device 102. The wireless mobile device 102 is illustrated as including a housing, an input device (a keyboard 724) and an output device (a display 726), which is preferably a full graphic or full color Liquid Crystal Display (LCD). Other types of output devices may alternatively be utilized. A processing device (a microprocessor 728) is shown schematically in FIG. 7 as coupled between the keyboard 724 and the display 726. The microprocessor 728 controls the operation of the display 726, as well as the overall operation of the mobile device 102, in response to, in part, actuation of keys on the keyboard 724 by a user.

The housing may be elongated vertically, or may take on other sizes and shapes (including clamshell housing structures). The keyboard 724 may include a mode selection key, or other hardware or software, for switching between text entry and telephony entry.

In addition to the microprocessor 728, other parts of the mobile device 102 are shown schematically in FIG. 7. These include a short-range communications subsystem 700 and a long-range communications subsystem 702. Input/output devices that are distinct from the keyboard 724 and the display 726 include a set of auxiliary I/O devices 706, a serial port 708, a speaker 711 and a microphone 712. Other parts of the mobile device 102 include memory devices, including a persistent flash memory 716 and a Random Access Memory (RAM) 718, and various other device subsystems 720. The mobile device 102 is preferably a two-way radio frequency (RF) communication device having voice and data communication capabilities. In addition, the mobile device 102 preferably has the capability to communicate with other computer systems via the Internet.

Operating system software executed by the microprocessor 728 is preferably stored in a computer readable medium, such as the flash memory 716, but may be stored in other types of memory devices, such as a read only memory (ROM) or a similar storage element. In addition, system software, specific device applications, or parts thereof, may be temporarily loaded into a volatile store, such as the RAM 718. Communication signals received by the mobile device 102 may also be stored to the RAM 718.

The microprocessor 728, in addition to its operating system functions, enables execution of software applications on the mobile device 102. A predetermined set of software applications that control basic device operations, such as a voice communications module 730A and a data communications module 730B, may be installed on the mobile device 102 during manufacture.

Additional software modules, illustrated as an other software module 730N, which may be, for instance, a personal information manager (PIM) application, may be installed during manufacture. The PIM application is preferably capable of organizing and managing data items, such as e-mail messages, calendar events, voice mail messages, appointments, and task items. The PIM application is also preferably capable of sending and receiving data items via a wireless carrier network. Preferably, the data items managed by the PIM application are seamlessly integrated, synchronized and updated via the wireless carrier network, with the mobile device 102 user's corresponding data items stored at, or associated with, an enterprise server.

Communication functions, including data and voice communications, may be performed through the long-range communication subsystem 702 and, possibly, through the short-range communications subsystem 700. The short-range communication subsystem 700 includes a receiver 750, a transmitter 752 and one or more antennas, illustrated as a receive antenna 754 and a transmit antenna 756. In addition, the short-range communication subsystem 700 also includes a controller or processing module, such as a digital signal processor (DSP) 758, and local oscillators (LOs) 760. The specific design and implementation of the short-range communication subsystem 700 is dependent upon the communications protocol in use in the network in which the mobile device 102 is intended to operate.

The short-range communications subsystem 700 enables communication between the mobile device 102 and other proximate systems or devices, which need not necessarily be similar devices. For example, the short-range communications subsystem 700 may include an infrared device and associated circuits and components, or a Bluetooth communication module, to provide for communication with similarly-enabled systems and devices, such as the personal computer 110. The Bluetooth communication module may, for further instance, be used to communicate with modules that extend the functionality of the mobile device 102 (e.g., headsets, car kits, etc.).

When the mobile device 102 has been discovered by the personal computer 110 and has accepted a pairing request from the personal computer 110, the mobile device 102 may send and receive communication signals over the wireless short-range network. Signals received from the personal computer 110 by the receive antenna 754 are routed to the receiver 750, which provides for signal amplification, frequency down conversion, filtering, channel selection, etc., and may also provide analog to digital conversion. Analog-to-digital conversion of the received signal allows the DSP 758 to perform more complex communication functions, such as demodulation and decoding. In a similar manner, signals to be transmitted to the personal computer 110 are processed (e.g., modulated and encoded) by the DSP 758 and are then provided to the transmitter 752 for digital to analog conversion, frequency up conversion, filtering, amplification and transmission to the personal computer 110 via the transmit antenna 756.

In addition to processing communication signals, the DSP 758 provides for control of the receiver 750 and the transmitter 752. For example, gains applied to communication signals in the receiver 750 and the transmitter 752 may be adaptively controlled through automatic gain control algorithms implemented in the DSP 758.

A received signal is processed by the short-range communication subsystem 700 and is input to the microprocessor 728. The received signal is then further processed by the microprocessor 728 in preparation for output to the display 726 or, alternatively, to some of the auxiliary I/O devices 706. A device user may also elect to send data items to the personal computer 110. The data items may then be transmitted to the personal computer 110 via the short-range communication subsystem 700.

The long-range communication subsystem 702 of the mobile device 102 may be designed to operate with the Mobitex™, DataTAC™ or General Packet Radio Service (GPRS) mobile data communication networks and may also be designed to operate with any of a variety of voice communication networks, such as Advanced Mobile Phone Service (AMPS), Time Division Multiple Access (TDMA), Code Division Multiple Access (CDMA), Personal Communications Service (PCS), GSM, etc. Other types of data and voice networks, both separate and integrated, may also be utilized with the mobile device 102.

In a long-range voice communication mode, signals received by the long-range communication subsystem 702 and passed to the microprocessor 728 may be output to the speaker 711 and signals for transmission may be generated by the microphone 712. Alternative voice or audio I/O subsystems, such as a voice message recording subsystem, may also be implemented on the mobile device 102. In addition, the display 726 may also be utilized in voice communication mode, for example, to display the identity of a calling party, the duration of a voice call, or other voice call related information.

Using the keyboard 724 and/or some other auxiliary I/O device 706, such as a touchpad, a rocker switch, a thumb-wheel, or some other type of input device, the user may toggle the mobile device 102 between the Bluetooth off state 202 and the Bluetooth on state 204 and also between the closed mode 402 and the open mode 404.

As will be apparent to those of ordinary skill, aspects of the present invention are not necessarily limited to use solely with the Bluetooth communications protocol. In fact, aspects of the present invention should work with any present or future networking protocol having similar discoverable/non-discoverable and pairable/non-pairable modes.

Advantageously, aspects of the present invention reduce the likelihood of a security attack by reducing the amount of time during which such a security attack may be attempted. Further advantageously, functionality of the Bluetooth networking feature is maintained intact and easy to use.

Advantageously, aspects of the present invention allow the user interface experience to be unchanged while, in the background operation of the device, the operation of the device is more secure.

Other modifications will be apparent to those skilled in the art and, therefore, the invention is defined in the claims.

## Claims

1. A method of enhancing security of wireless communications at a device (102), comprising:
providing an open mode in which frequencies are scanned for incoming address inquiries and pairing of said device with a requesting device (110) may be initiated whenever a request is received to establish wireless communications;
providing a closed mode in which frequencies are not scanned for incoming address inquiries and pairing is not initiated when a request is received to establish wireless communications; and wherein
after switching from said closed mode to said open mode, reverting to said closed mode after one of (i) a pre-determined duration and (ii) completing a pre-determined number of pairings.

2. The method of claim 1 wherein, in said open mode, said frequencies are scanned periodically.

3. The method of claim 1 or claim 2 further comprising switching from closed mode to said open mode responsive to a user input.

4. The method of claim 3 further comprising, after switching from said closed mode to said open mode, reverting to said closed mode after a pre-determined duration.

5. The method of claim 3 further comprising, after switching from said closed mode to said open mode, reverting to said closed mode after completing a predetermined number of pairings.

6. The method of any one of claims 1 through 5 further comprising, in said closed mode, transmitting a refusal message responsive to receiving said request to establish wireless communications.

7. The method of claim 6 further comprising recording said receiving said request to establish wireless communications.

8. The method of any one of claims 1 through 7 wherein said wireless communications are short range communications.

9. The method of claim 8 wherein said wireless communications are Bluetooth^{™} communications. '

10. The method of claim 5 wherein said predetermined number of pairing is one.

11. A mobile communication device (102) comprising:
an antenna (754);
a receiver(750); and
a controller (728) adapted to:
in an open mode: ,
instruct said receiver (750) to use said antenna (754) to scan for incoming address inquiries; and
initiate pairing of said device with a requesting device (110) responsive to receiving a request to establish wireless communications; and
in a closed mode:
instruct said receiver (750) not to scan for incoming address inquiries; and
transmit a refusal message to a requesting device (110) responsive to receiving a request to establish wireless communications, said controller (728), wherein after switching from said closed mode to said open mode, reverts to said closed mode after one of (i) a pre-determined duration and (ii) completing a pre-determined number of pairings.

12. A computer readable medium containing computer-executable instructions that, when performed by processor in a mobile communication device, cause said processor to implement the method of any one of claims 1 to 10.

13. A wireless network comprising a plurality of mobile communication devices according to claim 11.

## Patentansprüche

1. Ein Verfahren zum Verbessern der Sicherheit der drahtlosen Kommunikation an einem Gerät (102), das umfasst:
das Bereitstellen eines offenen Modus, in dem ein Absuchen von Frequenzen auf eingehende Adressenanfragen erfolgt und ein Koppeln (Pairing) des Geräts mit einem anfordernden Gerät (110) immer dann eingeleitet werden kann, wenn eine Anforderung zum Einrichten einer drahtlosen Kommunikation empfangen wird;
das Bereitstellen eines geschlossenen Modus, in dem kein Absuchen von Frequenzen auf eingehende Adressenanfragen erfolgt und kein Koppeln (Pairing) eingeleitet wird, wenn eine Anforderung zum Einrichten einer drahtlosen Kommunikation empfangen wird;
wobei das Verfahren **dadurch gekennzeichnet ist, dass** nach einem Wechsel vom geschlossenen Modus in den offenen Modus (i) nach einer vorgegebenen Zeitdauer und/oder (ii) nach dem Abschließen einer vorgegebenen Anzahl von Kopplungsvorgängen wieder in den geschlossenen Modus gewechselt wird.

2. Das Verfahren gemäß Anspruch 1, wobei im offenen Modus das Absuchen der Frequenzen periodisch erfolgt.

3. Das Verfahren gemäß Anspruch 1 oder Anspruch 2, das darüber hinaus den Wechsel vom geschlossenen Modus in den offenen Modus als Reaktion auf eine Benutzereingabe umfasst.

4. Das Verfahren gemäß Anspruch 3, das darüber hinaus nach einem Wechsel vom geschlossenen Modus in den offenen Modus den Wechsel zurück in den geschlossenen Modus nach einer vorgegebenen Zeitdauer umfasst.

5. Das Verfahren gemäß Anspruch 3, das darüber hinaus nach einem Wechsel vom geschlossenen Modus in den offenen Modus den Wechsel zurück in den geschlossenen Modus nach dem Abschließen einer vorgegebenen Anzahl von Kopplungsvorgängen umfasst.

6. Das Verfahren gemäß jedem der Ansprüche 1 bis 5, das darüber hinaus das Übertragen einer Ablehnungsmeldung nach dem Empfangen der Anforderung zum Einrichten einer drahtlosen Kommunikation im geschlossenen Modus umfasst.

7. Das Verfahren gemäß Anspruch 6, das darüber hinaus das Aufzeichnen des Empfangens der Anforderung zum Einrichten einer drahtlosen Kommunikation umfasst.

8. Das Verfahren gemäß jedem der Ansprüche 1 bis 7, wobei es sich bei der drahtlosen Kommunikation um eine Nahbereichskommunikation handelt.

9. Das Verfahren gemäß Anspruch 8, wobei es sich bei der drahtlosen Kommunikation um eine Bluetooth^{™}-Kornmunikation handelt.

10. Das Verfahren gemäß Anspruch 5, wobei die vorgegebene Anzahl von Kopplungsvorgängen eins beträgt.

11. Ein mobiles Kommunikationsgerät (102), das umfasst:
eine Antenne (754);
einen Empfänger (750); und
einen Controller (728), der dazu ausgelegt ist:
in einem offenen Modus:
den Empfänger (750) anzuweisen, mittels der Antenne (754) nach eingehenden Adressenanforderungen zu suchen; und
das Koppeln des Geräts mit einem anfordernden Gerät (110) als Reaktion auf das Empfangen einer Anforderung zum Einrichten einer drahtlosen Kommunikation einzuleiten; und
in einem geschlossenen Modus:
den Empfänger (750) anzuweisen, nicht nach eingehenden Adressenanforderungen zu suchen; und
eine Ablehnungsmeldung an ein anforderndes Gerät (110) als Reaktion auf das Empfangen einer Anforderung zum Einrichten einer Kommunikation zu übertragen; wobei der Empfänger **dadurch gekennzeichnet ist, dass** er nach einem Wechsel vom geschlossenen Modus in den offenen Modus (i) nach einer vorgegebenen Zeitdauer und/oder (ii) nach dem Abschließen einer vorgegebenen Anzahl von Kopplungsvorgängen wieder in den geschlossenen Modus wechselt.

12. Ein durch Computer lesbares Medium, das durch Computer ausführbare Anweisungen enthält, die bei der Ausführung durch einen Prozessor in einem mobilen Kommunikationsgerät den Prozessor zum Umsetzen des Verfahrens gemäß jedem der Ansprüche 1 bis 10 veranlassen.

13. Ein drahtloses Netz, das eine Mehrzahl von mobilen Kommunikationsgeräten gemäß Anspruch 11 beinhaltet.

## Revendications

1. Procédé d'amélioration de la sécurité des communications sans fil au niveau d'un dispositif (102), comprenant :
la fourniture d'un mode ouvert dans lequel les fréquences sont balayées pour y détecter des demandes d'adresses entrantes et l'association en paire dudit dispositif à un dispositif demandeur (110) peut être déclenchée à chaque fois qu'une demande est reçue pour établir des communications sans fil ;
la fourniture d'un mode fermé dans lequel les fréquences ne sont pas balayées pour y détecter des demandes d'adresses entrantes et l'association en paire n'est pas déclenchée lorsqu'une demande est reçue pour établir des communications sans fil ; et **caractérisé par**
après une commutation dudit mode fermé audit mode ouvert, le retour audit mode fermé après l'un des événements suivants : (i) l'écoulement d'une durée prédéterminée et (ii) la formation d'un nombre prédéterminé de paires.

2. Procédé selon la revendication 1, dans lequel, dans ledit mode ouvert, lesdites fréquences sont balayées périodiquement.

3. Procédé selon la revendication 1 ou la revendication 2, comprenant en outre la commutation dudit mode fermé audit mode ouvert en réponse à une entrée d'un utilisateur.

4. Procédé selon la revendication 3, comprenant en outre, après la commutation dudit mode fermé audit mode ouvert, le retour audit mode fermé après l'écoulement d'une durée prédéterminée.

5. Procédé selon la revendication 3 comprenant en outre, après la commutation dudit mode fermé audit mode ouvert, le retour audit mode fermé après la formation d'un nombre prédéterminé de paires.

6. Procédé selon l'une quelconque des revendications 1 à 5 comprenant en outre, dans ledit mode fermé, l'émission d'un message de refus en réponse à la réception de ladite demande d'établissement de communications sans fil.

7. Procédé selon la revendication 6, comprenant en outre l'enregistrement de ladite réception de ladite demande d'établissement de communications sans fil.

8. Procédé selon l'une quelconque des revendications 1 à 7, dans lequel lesdites communications sans fil sont des communications à courte portée.

9. Procédé selon la revendication 8, dans lequel les communications sans fil sont des communications Bluetooth^{™}.

10. Procédé selon la revendication 5, dans lequel le nombre prédéterminé de formation de paires est un.

11. Dispositif de communication mobile (102) comprenant :
une antenne (754) ;
un récepteur (750) ; et
un dispositif de commande (728) conçu pour :
dans un mode ouvert :
ordonner audit récepteur (750) d'utiliser ladite antenne (754) pour effectuer un balayage pour détecter des demandes d'adresses entrantes ; et
déclencher l'association en paires dudit dispositif à un dispositif demandeur (110) en réponse à la réception d'une demande d'établissement de communications sans fil ; et
dans un mode fermé :
ordonner audit récepteur (750) de ne pas effectuer de balayage pour détecter les demandes d'adresses entrantes ; et
émettre un message de refus vers un dispositif demandeur (110) en réponse à la réception d'une demande d'établissement de communications sans fil, **caractérisé en ce que** ledit dispositif de commande (728), après la commutation dudit mode fermé audit mode ouvert, revient audit mode fermé après l'un des événements suivants : (i) l'écoulement d'une durée prédéterminée et (ii) la formation d'un nombre prédéterminé de paires.

12. Support lisible par ordinateur contenant des instructions exécutables par ordinateur qui, lorsqu'elles sont exécutées par le processeur d'un dispositif de communication mobile, font mettre en oeuvre par ledit processeur le procédé selon l'une quelconque des revendications 1 à 10.

13. Réseau sans fil comprenant une pluralité de dispositifs de communication mobile selon la revendication 11.
